# EUROPEAN PATENT SPECIFICATION

(11) **EP 2 824 729 B1**
(45) Date of publication and mention of the grant of the patent: **08.08.2018**
(21) Application number: 14162623.4
(22) Date of filing: 31.03.2014
(51) Int. Cl.: H01M 2/04

(54) **Rechargeable battery**
Wiederaufladbare Batterie
Batterie rechargeable

(30) Priority: 12.07.2013 US 201361845662 P; 28.03.2014 US 201414228758
(43) Date of publication of application: 14.01.2015
(73) Proprietor: Samsung SDI Co., Ltd., Yongin-si, Gyeonggi-do 449-577 (KR)
(72) Inventor: Kwak, Yoon-Tai, Yongin-si, Gyeonggi-do (KR); Hwangbo, Yup, Yongin-si, Gyeonggi-do (KR)
(74) Representative: Gulde & Partner

(56) References cited:
- DE-A1- 2 036 158
- DE-U1-202012 007 958
- JP-A- H10 144 268
- JP-A- 2013 093 208
- KR-B1- 100 795 680
- US-A1- 2006 099 499

## Description

### BACKGROUND OF THE INVENTION

### (a) Field of the Invention

The present invention relates to a rechargeable battery, wherein the rechargeable battery comprises an electrode assembly, a case, in which the electrode assembly is arranged, and a cap plate that closes an opening of the case, wherein the case has the shape of cuboid having long lateral sides and short lateral sides, and the cap plate is a quadrangle having long lateral sides and short lateral sides corresponding to the opening, wherein the cap plate comprises two contact sections at its opposite ends, the contact sections at its opposite ends, the opposite ends being the short lateral sides of the cap plate, and the contact sections contacting the case in an assembled state of the rechargeable battery. Rechargeable batteries are disclosed e.g. in DE 20 2012 007958 U1, US 2006/099499 A1, KR 100 795 680 B1 and DE 20 36 158 A1.

### (b) Description of the Related Art

A rechargeable battery is a battery that can repeatedly perform charging and discharging unlike a primary battery. A rechargeable battery having a small capacity may be used in a portable small electronic device such as a mobile phone, a laptop computer and a camcorder. A rechargeable battery having a large capacity may be used as a power source for driving a motor of hybrid and electric vehicles.

For example, the rechargeable battery includes the electrode assembly performing charging and discharging, the case receiving the electrode assembly and an electrolyte solution, a cap plate fastened to the case, and an electrode terminal provided in the cap plate to be electrically connected to the electrode assembly. aWhen the cap plate is assembled with the case, a step is formed at a position at which the opening of the case is to be situated by a press process for the purpose of an alignment operation of the case and the cap plate. In addition, the case is molded by deep drawing.

When the cap plate is assembled with the case, a step is formed at a position at which the opening of the case is to be situated by a press process for the purpose of an alignment operation of the case and the cap plate. In addition, the case is molded by deep drawing.

However, a shape of the step in the opening is non-uniform due to a technical limit in deep drawing. Accordingly, the cap plate is difficult to be safely seated in the opening and the step of the case, and may be over-inserted into the opening.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a rechargeable battery in which when a cap plate is fastened to a case, safe seating of the cap plate in an opening of the case is induced and over-insertion of the cap plate is prevented.

The object of the invention is achieved for the rechargeable battery mentioned in the beginning in that the contact sections are formed asymmetrically to each other, wherein at least one of the contact sections is at least partly arc shaped.

The simple solution of asymmetrically shaping the contact sections provides a safe seating of the cap plate in the opening of the case and a prevention of over-insertion of the cap plate into the opening.

The solution according to the invention can be combined as desired and further improved by the following embodiments that are advantageous on their own, in each case.

According to a first possible embodiment, the case can comprise two support sections that are each in contact with one of the contact sections, wherein the form of the support sections at least partly corresponds to the form of the contact sections which they contact. Hence, the support section are asymmetrically formed to each other. The contact sections may be formed by plastic deformation while the cap plate is being inserted into the opening. In particular, the support sections may deform the contact sections as soon as they contact each other, if the cap plate is pressed into the opening. By asymmetrically forming both, the contact sections and the support sections, an incorrect placement of the cap plate in the opening is prevented, as the cap plate can only be inserted into the opening in a predetermined orientation with respect to the case. In particular, each of the support sections may for formed complementary to one of the contact sections. The incorrect placement can be prevented if the contact and the support sections are formed before assembling the battery or when reinserting the cap plate into the opening after initially forming the contact sections with the support sections.

The case has a shape of a cuboid having long lateral sides and short lateral sides. The cap plate has a shape of a quadrangle having long sides and short sides corresponding to the opening. The contact and the support sections are arranged at the sort lateral sides, which are opposite ends in case of the cap plate. The contact sections may be formed as planes that are differently tilted with respect to a reference plane. Hence, the cap palte may have a cross section that corresponds to a trapezoid, wherein parallel sides of the trapezoid are formed by inner and outer sides of the cap plate and slanted sided of the trapezoid are formed by the contact sections. The inner side may face the electrode assembly and the outer side may be arranged opposite of the inner side and face away from the electrode assembly in the assembled state. Forming contact sections as planes is easy and by differently tilting the planes, safe seating and preventing incorrect placement of the cap palte is effectively provided.
For instance, a first inclination angle of one of the plain contact sections may be set to be smaller than a second inclination angle of the other one of the plain contact dections. The inclination angles may be measured between the reference plane, which may be the inner side or the outer side of the cap plate. Preferably, absolute values of the inclination angles differ from each other. According to a possible embodiment, one of the contact sections may be orientated perpendicular to the inner side of the cap plate. Thus, in case the cap palte has the form of a cuboid before forming the contact sections, it is sufficient to process or deform only one of the contact sections, still arriving at a cap plate with asymmetric contact sections, that facilitate a safe seating of the cap palte. One of the support sections preferably is at least sectionwise shaped with a seat or abutmant for one of the contact sections. As a support or bearing, the seat provides for a proper support for the cap plate and prevents that the cap palte and in particular one of its contact sections inadvertedly slides or slips off of the seat. Hence, the seat may also be designated as a support. According to the invention, at least one of the contact sections is at least partly arc-shaped. At least sectionwise or even completely arc-shaped contact sections comprise larger surfaces than e.g. flat contact sections. Contact sections with an increased surface provide for a seating of the cap plate in the support sections that is even more safe and furthermore allow a simplified placement of the cap plate in the opening. Furthermore, forming contact sections by plastic deformation with arched surfaces is easier than forming e.g. edges.
In particular, one if the contact sections may be arc-shaped and the other one of the contact sections may be formed differently and for instance flat. The arc-shaped contact section prevents the cap plate from slipping off of the support section, in particular if the support sections are each formed complementary to one of the contact section.
In case both of the contact sections are at least partially arc-shaped, a thicknesses of the arc-shaped parts of the contact sections may be different. For instance, radii of the arc-shaped contact sections may differ from each other. Furthermore, an arc-length of one of the contact sections may differ from an arc-length of the other one of the contact sections. Thus, insertions of the cap palte into the opening is further simplified and the stability of the seating of the cap palte in the opening is further improved.
The cap plate can be formed with overhang sections that overlap with projections of the contact sections, wherein the overhang sections have different widths. Thus, the orientation of the cap plate can be visually detected before inserting the cap plate into the opening.

The case may comprise an upper circumferential border that faces away from the electrode assembly, wherein opposite sections of the border have different widths. The borders are preferably each adjacent to one of the support sections. The widths of the borders are for instance inversely proportional to the widths of the overhang sections. Thus, the predetermined orientation, in which the cap plate can be inserted into the opening, can be visually detected before or at least when inserting the cap plate into the opeing.

Furthermore, a thickness of one of the contact sections may be set to be larger than a thickness of another one of the contact sections. The thickness of the contact sections may be measured perpendicular to the short lateral sides of the cap palte and between a point, where the contact section intersects the outer side of the cap plate and a point where the contact section intersects the inner side of the cap plate.

At least one of the contact sections may be provided with at least one protrusion or with at least one recess. Hence, the contact section and the support section, that shall be brought into contact with this contact section, may in turn be provided with a recess for accommodating the protrusion or with a projection that is to be arranged in the recess, thereby further stabilizing the seating of the cap plate in the opening. The recess may be formed by plastic deformation by the protrusion when inserting the cap plate into the opening.

Further, the contact section may be provided with one protrusion and the suport section may comprise at least two projections, between which the protrusion is arranged in the assembled state. Moreover the contact section may be provided with at least two protrusions and the suport section may comprise one projection, wherein the projection is arranged between the protrusions in the assembled state.

In other words, at least one of the contact sections may comprise at least one recess or at least one protrusion and the corresponding one of the support sections can comprise at least one projection or at least one recess, wherein the protrusion is insertable into the recess or between two projections by placing the cap plate into the opening. Thus, assembling the case and the cap plate is easy and results in a very stable seating of the cap plate in the opening.

The at least one protrusion of one of the contact sections may have a size and e.g. a length perpendicular the short lateral side, or a width parallel to the short lateral side, on which the contact section is arranged that differs from a length or a width of the at least one protrusion of the other one of the contact sections. Alternatively or additionally, the protrusions may be differently arranged on the contact sections in order to provide for the asymmetrically.

Preferably, the recess and the protrusion or the protrusion and the two projections constitute a form fit. Thus, assembling the case and the cap plate is even easier and results in an even more stable seating of the cap plate in the opening, in particular due to the form fit, which may be free from play, provided by protrusions and recesses and / or by protrusions and projections. In particular, if the recess is formed by the protrusion when pressing the cap plate into the opening, the resulting fit may be without play.

In another possible embodiment, the recess may be formed as a channel that extends along the support section and in particular along the short lateral side of the case. The channel may open towards an opposite side of the case and away from a base of the case. The contact section and in particular the at least one protrsion of the contact section can be easily placed into to channel, for instance compared to inserting the protrusion into the recess or between the two projections. Yet, using recesses or prjections instead of or in addition to the channel provides for an improved seating, with, however, a potentially more complicated assembly of the case and the cap plate.

The cap plate may comprise a center part or body that is insertable into the opening, and an edge that is formed with a protruding lip. The protruding lip may be part of the contact section or the contact section may be part of the protruding lip. Alternatively, the contact section may be arranged between the the protruding lip and the center part. For instance, the protruding lip may project from the contact section and may be adjacent to the contact section. In the assembled state, the protruding lip preferably rests on the circumferential border, preventing that the cap palte falls into the opening.

At least one electrode terminal of the rechargeable battery, via which an external consumer or source of battery energy can be connected to the electrode assembly, may extend through the cap plate. By using the cap plate according to the invention, not only the electrode terminals are safely positioned. Furthermore, an incorrect arrangement of the electrode terminals is prevented, reducing the risk of connecting the battery with an incorrect polarity.

The contact and the support sections may be formed on internal surfaces of the opening of the case to correspond to a portion of external surfaces of the cap plate.

The contact and the support sections may be formed on the external surfaces of the cap plate to correspond to a portion of the internal surfaces of the opening of the case.

The contact and the support sections may be formed on a portion of the internal surfaces of the opening of the case and on a portion of the external surfaces of the cap plate to correspond to each other.

The contact and the support sections may be formed on a portion of the internal surfaces of the opening of the case and on a portion of the external surfaces of the cap plate to have a shape of at least an inclined surface or a protrusion.

The case may have a shape of a cuboid having long lateral sides and short lateral sides. The cap plate may have a shape of a quadrangle having long sides and short sides corresponding to the opening.

The contact and the support sections may include a first inclined section formed on the short lateral side at a side of the first electrode terminal, and a second inclined section formed on the short lateral side at a side of the second electrode terminal, which are formed in the case.

The contact and the support sections may further include a first corresponding inclined section formed on the external surface of the cap plate to correspond to the first inclined section, and a second corresponding inclined unit formed on the external surface of the cap plate to correspond to the second inclined section.

Therefore, when the cap plate is fastened to the case, safe seating of the cap plate in the opening of the case is induced and over-insertion of the cap plate into the opening is prevented.

The invention is described hereinafter in greater detail and in an exemplary manner using advantageous embodiments and with reference to the drawings. The invention is defined by the appended claims. The described embodiments are only possible configurations in which, however, the individual features as described above can be provided independently of one another or can be omitted in the drawings.

### BRIEF DESCRIPTION OF THE DRAWINGS

FIG. 1 is a schematic perspective view of a rechargeable battery according to a first exemplary embodiment of the present invention.
FIG. 2 is a schematic cross-sectional view taken along the line II-II of FIG. 1.
FIG. 3 is a schematic exploded perspective view of a case and a cap plate in the rechargeable battery shown in FIG. 1.
FIG. 4 is a schematic cross-sectional view taken along the line IV-IV of FIG. 3.
FIG. 5 is a schematic cross-sectional view of a rechargeable battery according to a second exemplary embodiment of the present invention.
FIG. 6 is a schematic exploded perspective view of a case and a cap plate in a rechargeable battery according to a third exemplary embodiment of the present invention.
FIG. 7 is a schematic cross-sectional view taken along the line VII-VII of FIG. 6. FIG. 8 is a schematic exploded perspective view of a case and a cap plate in a rechargeable battery according to a fourth exemplary embodiment of the present invention.
FIG. 9 is a schematic cross-sectional view taken along the line IX-IX of FIG. 8. FIG. 10 is a schematic exploded perspective view of a case and a cap plate in a rechargeable battery according to a fifth exemplary embodiment of the present invention.
FIG. 11 is a schematic cross-sectional view taken along the line XI-XI of FIG. 10. FIG. 12 is a schematic exploded perspective view of a case and a cap plate in a rechargeable battery according to a sixth exemplary embodiment of the present invention.
FIG. 13 is a schematic cross-sectional view taken along the line XIII-XIII of FIG. 12.

### DETAILED DESCRIPTION OF THE EMBODIMENTS

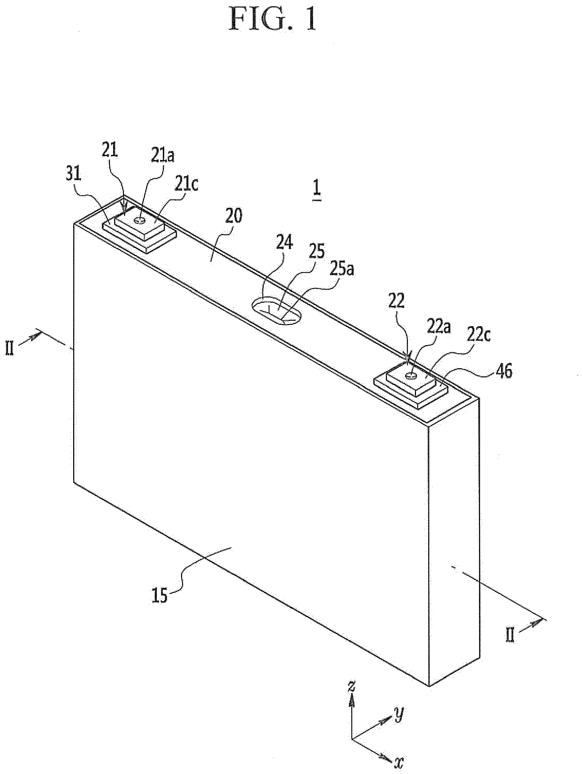

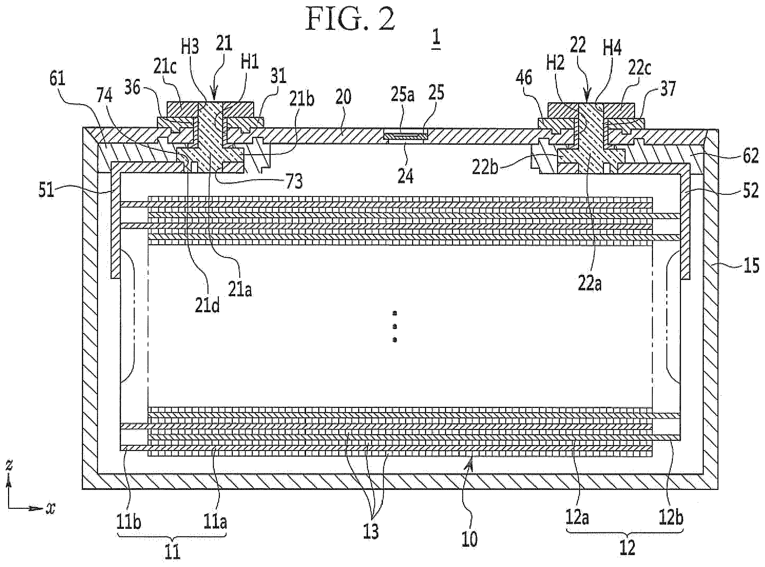

FIG. 1 is a perspective view of a rechargeable battery according to a first exemplary embodiment of the present invention. FIG. 2 is a cross-sectional view taken along the line II-II of FIG. 1. Referring to FIGS. 1 and 2, a rechargeable battery 1 according to the first exemplary embodiment includes an electrode assembly 10 charging and discharging a current, a case 15 receiving the electrode assembly 10 and an electrolyte solution, a cap plate 20 fastened to and closing an opening of the case 15, and electrode terminals 21 and 22 provided at the cap plate 20.

For example, the electrode assembly 10 is formed by disposing electrodes (for example, a cathode 11 and an anode 12) on both sides of a separator 13 that is an insulator and winding the cathode 11, the separator 13, and the anode 12 in a jelly roll state.

The cathode and the anode 11 and 12 includes coating units 11a and 12a in which an active material is applied on a current collector of a metal plate, and uncoated regions 11b and 12b formed of the current collector which is not coated with the active material but exposed.

The uncoated region 11b of the cathode 11 is formed at an end of the cathode 11 along the wound cathode 11. The uncoated region 12b of the anode 12 is formed at an end of the anode 12 along the wound anode 12. In addition, the uncoated regions 11b and 12b are disposed at both ends of the electrode assembly 10.

The case 15 for instance has a shape of an approximate cuboid so as to form a space receiving the electrode assembly 10 therein. The opening of the case 15 is formed in one side of the cuboid to allow the electrode assembly 10 to be inserted from the outside into an internal space.

The cap plate 20 is provided in the opening of the case 15 to seal the case 15. For example, the case 15 and the cap plate 20 may be formed of aluminum and welded to each other. That is, after the electrode assembly 10 is inserted into the case 15, the cap plate 20 may be welded to the case 15.

Further, the cap plate 20 has one or more openings, for example, terminal holes H1 and H2 and a vent hole 24. The electrode terminals 21 and 22 are provided in the terminal holes H1 and H2 of the cap plate 20, respectively, to be electrically connected to the electrode assembly 10.

That is, the electrode terminals 21 and 22 are electrically connected to the cathode 11 and the anode 12 of the electrode assembly 10, respectively. Accordingly, the electrode assembly 10 may be connected to the outside of the case 15 via the electrode terminals 21 and 22.

The electrode terminals 21 and 22 include plate terminals 21c and 22c disposed on an external side of the cap plate 20 to correspond to the terminal holes H1 and H2, and rivet terminals 21a and 22a electrically connected to the electrode assembly 10 and fastened to the plate terminals 21c and 22c through the terminal holes H1 and H2.

The plate terminals 21c and 22c have through-holes H3 and H4. The rivet terminals 21a and 22a are inserted into the through-holes H3 and H4 while passing through the terminal holes H1 and H2 at upper ends thereof. The electrode terminals 21 and 22 further include flanges 21b and 22b widely integrated with the rivet terminals 21a and 22a in the cap plate 20.

In a first electrode terminal 21 connected to the cathode 11, an external insulation member 31 interposed between the plate terminal 21c and the cap plate 20 electrically insulates the plate terminal 21c and the cap plate 20. That is, a state where the cap plate 20 is insulated from the electrode assembly 10 and the cathode 11 is maintained.

The insulation member 31 and the plate terminal 21c are coupled with an upper end of the rivet terminal 21a and the upper end is riveted or welded to fasten the insulation member 31 and the plate terminal 21c to the upper end of the rivet terminal 21a. The plate terminal 21c is provided on an external side of the cap plate 20 while the insulation member 31 is interposed therebetween.

At the side of the second electrode terminal 22 connected to the anode 12, a conductive top plate 46 interposed between the plate terminal 22c and the cap plate 20 electrically connects the plate terminal 22c and the cap plate 20. That is, a state where the cap plate 20 is electrically connected to the electrode assembly 10 and the anode 12 is maintained.

The top plate 46 and the plate terminal 22c are coupled with the upper end of the rivet terminal 22a and the upper end is riveted or welded to fasten the top plate 46 and the plate terminal 22c to the upper end of the rivet terminal 22a. The plate terminal 22c is provided on the external side of the cap plate 20 while the top plate 46 is interposed therebetween.

Gaskets 36 and 37 are provided between the rivet terminals 21a and 22a of the electrode terminals 21 and 22 and internal surfaces of the terminal holes H1 and H2 of the cap plate 20 to seal a space between the rivet terminals 21a and 22a and the cap plate 20 and electrically insulate the rivet terminals 21a and 22a and the cap plate 20.

The gaskets 36 and 37 further extend between the flanges 21b and 22b and the internal surface of the cap plate 20 to further seal a space between the flanges 21b and 22b and the cap plate 20 and electrically insulate the flanges 21b and 22b and the cap plate 20. That is, the gaskets 36 and 37 prevent leakage of the electrolyte solution through the terminal holes H1 and H2 when the electrode terminals 21 and 22 are provided in the cap plate 20.

Meanwhile, lead tabs 51 and 52 electrically connect the electrode terminals 21 and 22 to the cathode and the anode 11 and 12 of the electrode assembly 10, respectively. That is, the lead tabs 51 and 52 are coupled with lower ends of the rivet terminals 21a and 22a and the lower ends are caulked to connect the lead tabs 51 and 52 to the lower ends of the rivet terminals 21a and 22a while the lead tabs 51 and 52 are supported by the flanges 21b and 22b.

Insulation members 61 and 62 are provided between the lead tabs 51 and 52 and the cap plate 20 to electrically insulate the lead tabs 51 and 52 and the cap plate 20. Further, the insulation members 61 and 62 are coupled with the cap plate 20 at one side thereof and surround the lead tabs 51 and 52, the rivet terminals 21a and 22a, and the flanges 21b and 22b at another side thereof, thus stabilizing a connection structure thereof.

A vent hole 24 is sealed by a vent plate 25 so as to exhaust internal pressure of the rechargeable battery 1 and generated gas therethrough. When the internal pressure of the rechargeable battery 1 reaches a predetermined pressure, the vent plate 25 is cut to open the vent hole 24. The vent plate 25 has a notch 25a for inducing cutting.

Meanwhile, the cap plate 70 of the rechargeable battery 1 of the first exemplary embodiment comprises contact sections C1, C2 that are formed asymmetrically to each other in order to induce safe seating of the cap plate 20 in the opening of the case 15 and prevent over-insertion of the cap plate 20 into the opening when the cap plate 20 is fastened to the opening of the case 15.

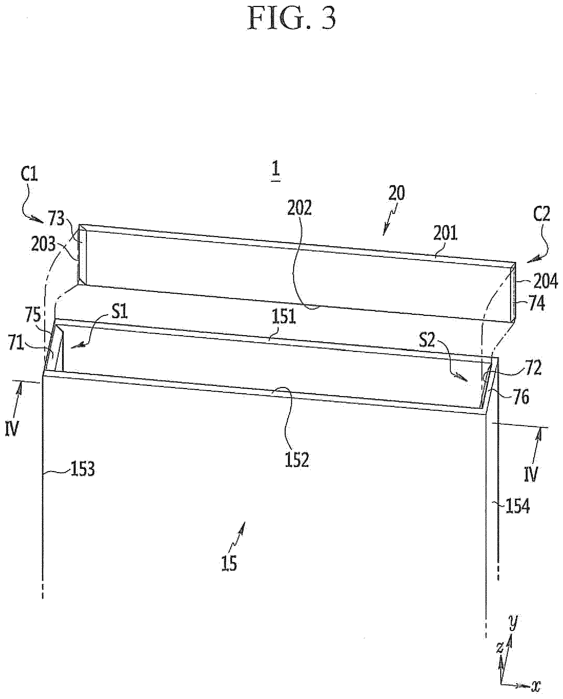

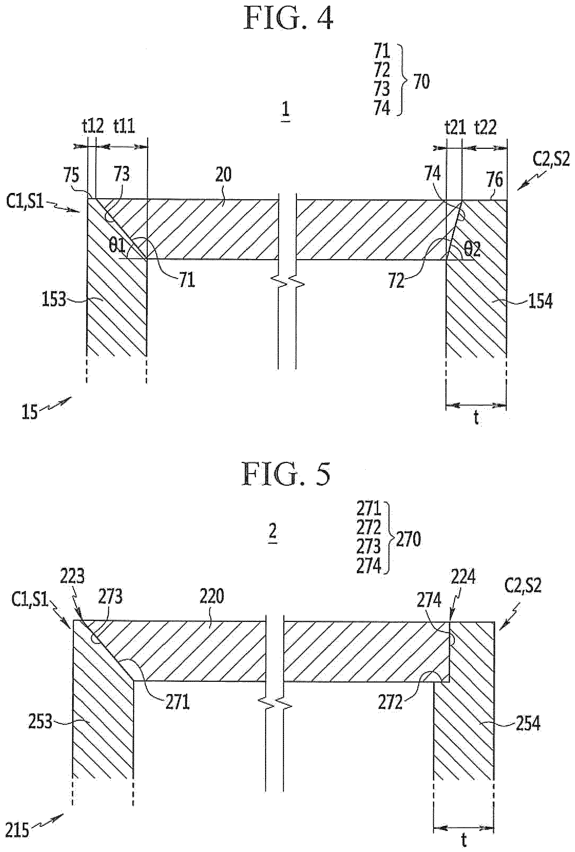

FIG. 3 is an exploded perspective view of the case and the cap plate in the rechargeable battery shown in FIG. 1. FIG. 4 is a cross-sectional view taken along the line IV-IV of FIG. 3. Referring to FIGS. 3 and 4, the case 15 has a shape of a cuboid having long lateral sides 151 and 152 and short lateral sides 153 and 154 of an opening. The cap plate 20 has a shape of a quadrangle having long sides 201 and 202 and short sides 203 and 204 corresponding to the opening.

In the first exemplary embodiment, interconnection areas 70 each include contact and support sections C1, C2, S1, S2. The support sections S1, S2 comprise a first inclined plane 71 formed on the short lateral side 153 of the opening at the side of the first electrode terminal 21, and a second inclined plane 72 formed on the short lateral side 154 of the opening at the side of the second electrode terminal 22. The first and second inclined planes 71 and 72 induce safe seating of the cap plate 20 in the opening.

When the cap plate 20 is provided in the opening of the case 15 having the first and second inclined planes 71 and 72, the short lateral sides 203 and 204 of the cap plate 20 are modified and forcibly fastened to the first and second inclined planes 71 and 72. In this case, a corresponding inclined planes 73, 74 of each of the contact sections C1, C2 is formed at the cap plate 20.

That is, the interconnection areas 70 further include the first corresponding inclined plane 73 formed on the external surface of the short side 203 of the cap plate 20 to correspond to the first inclined plane 71, and a second corresponding inclined plane 74 formed on the external surface of the short side 204 of the cap plate 20 to correspond to the second inclined unit 72. The first and second corresponding inclined planes 73 and 74 are formed by modification of the short sides 203 and 204 of the cap plate 20 by the first and second inclined planes 71 and 72.

A first inclination angle θ1 of the first inclined plane 71 is different from and e.g. set to be smaller than a second inclination angle θ2 of the second inclined plane 72 based on an internal plane of the cap plate 20. That is, the first and second inclined planes 71 and 72 are formed to be asymmetric to each other. The first and second inclined planes 71 and 72 which are asymmetric to each other prevent over-insertion of the cap plate 20 to be safely seated.

The case 15 further includes a first circumferential border 75 formed on external sides of the first inclined plane 71 and the first corresponding inclined plane 73 corresponding to each other to correspond to the external surface of the cap plate 20, and a second circumferential border 76 formed on external sides of the second inclined plane 72 and the second corresponding inclined plane 74 corresponding to each other to correspond to the external surface of the cap plate 20.

In the case 15, thicknesses or width t of the short lateral sides 153 and 154 are the same as each other. Accordingly, a thickness or width t11 of an overhang section O1 of the first inclined plane 71 in the short lateral side 153 of one side is set to be larger than a thickness or width t21 of an overhang section O2 of the second inclined plane 72 in the short lateral side 154 of another side. A thickness or width t12 of the first circumferential border 75 is set to be smaller than a thickness or width t22 of the second circumferential border 76.

For example, the cathode 11 may be formed of copper, and the anode 12 may be formed of aluminum. Accordingly, the first electrode terminal 21 connected to the uncoated region 11b of the cathode 11 having a large specific gravity is heavier than the second electrode terminal 22 connected to the uncoated region 12b of the anode 12.

Accordingly, when the electrode assembly 10 is inserted into the opening of the case 15 while the electrode assembly 10 is connected to the cap plate 20, the cap plate 20 is inclined and receives force to be further inserted into the case 15 at the side of the first electrode terminal 21 as compared to at the side of the second electrode terminal 22. Therefore, one side of the cap plate 20 may be over-inserted into the opening.

In order to prevent over-insertion, the first inclined plane 71 is formed to be gentler than the second inclined plane 72, and a margin at the side of the first electrode terminal 21 is ensured to be larger than a margin at the side of the second electrode terminal 22 so that the cap plate 20 is easily safely seated.

Accordingly, the short side 203 of the cap plate 20 is not over-inserted into the case 15 but may be safely seated on at least the first inclined plane 71. In this case, the short side 204 of the cap plate 20 is safely seated on the second inclined plane 72. That is, the cap plate 20 is not over-inserted into the case 15.

Hereinafter, various exemplary embodiments of the present invention will be described. The same constitution as the first exemplary embodiment and the aforementioned exemplary embodiment will be omitted, and the different constitution will be described.

FIG. 5 is a cross-sectional view of a rechargeable battery according to a second exemplary embodiment of the present invention. Referring to FIG. 5, in a rechargeable battery 2 of the second exemplary embodiment, an interconnection area 270 is formed in an opening of a case 215. The interconnection area 270 includes contact and support sections C1, C2, S1, S2. An inclined plane 271 is formed on a short lateral side 253 of the opening at the side of the first electrode terminal 21 and a seat 272 is formed on a short lateral side 254 at the side of the second electrode terminal 22. The inclined plane 271 and the seat 272 induce safe seating of a cap plate 220 in the opening.

When the cap plate 220 is provided in the opening of the case 215 having the inclined plane 271 and the seat 272, short lateral sides 223 and 224 of the cap plate 220 are modified and forcibly fastened to the first and second inclined planes 271 and 272. In this case, a corresponding inclined plane corresponding to the step unit 270 is formed in the cap plate 220.

That is, the interconnection areas 70 further include a corresponding inclined plane 273 formed on the external surface of the cap plate 220 to correspond to the inclined plane 271, and a corresponding end 274 formed on the external surface of the cap plate 220 to correspond to the seat 272. The corresponding inclined plane 273 and the corresponding end 274 are formed by modification of the short sides 223 and 224 of the cap plate 220 by the first and second inclined planes 271 and 272.

When the electrode assembly 10 is inserted into the opening of the case 215 while the electrode assembly 10 is connected to the cap plate 220, the cap plate 220 is inclined and receives force to be further inserted into the case 215 at the side of the first electrode terminal 21 as compared to at the side of the second electrode terminal 22. Therefore, one side of the cap plate 220 may be over-inserted into the opening.

In order to prevent over-insertion, the inclined plane 271 is formed to be gentler than the seat 272, and a margin at the side of the first electrode terminal 21 is ensured to be larger than a margin at the side of the second electrode terminal 22 so that the cap plate 220 is easily safely seated.

Accordingly, the short lateral side 223 of the cap plate 220 is not over-inserted into the case 215 but may be safely seated on at least the inclined plane 271. In this case, the short lateral side 224 of the cap plate 220 is safely seated on the corresponding end 274. That is, the cap plate 220 is not over-inserted into the case 215.

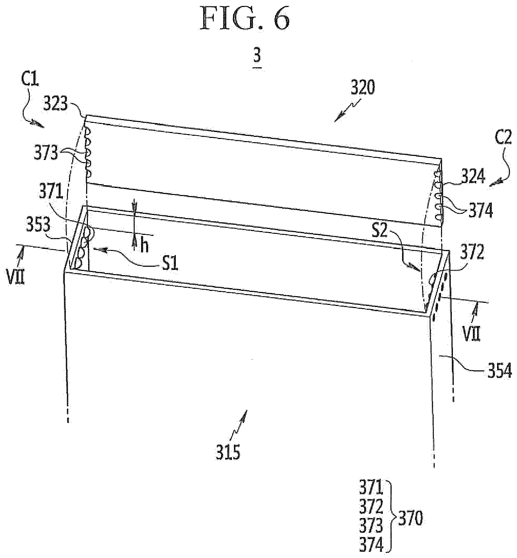

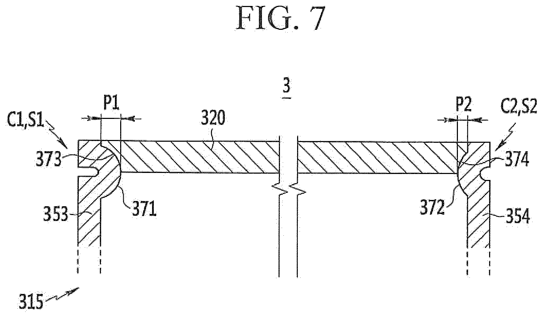

FIG. 6 is an exploded perspective view of a case and a cap plate in a rechargeable battery according to a third exemplary embodiment of the present invention. FIG. 7 is a cross-sectional view taken along the line VII-VII of FIG. 6. Referring to FIGS. 6 and 7, in a rechargeable battery 3 of the third exemplary embodiment, interconnection areas 370 are formed in a case 315. The interconnection areas 370 include support sections S1, S2 with a first protrusion 371 formed on a short lateral side 353 of the opening at the side of the first electrode terminal 21 and a second protrusion 372 formed on a short lateral side 354 at the side of the second electrode terminal 22. The first and second protrusions 371 and 372 induce safe seating of a cap plate 320 in the opening.

When the cap plate 320 is provided in the opening of the case 315 having the first and second protrusion 371 and 372, the short sides 323 and 324 of the cap plate 320 are modified and forcibly fastened to the first and second protrusion 371 and 372. In this case, a corresponding recess corresponding to one of the interconnection areas 370 and in particular being complementary to one of the protrusions 371, 372 is formed in the cap plate 320.

That is, one of the interconnection areas 370 may further include a first corresponding recess 373 formed on the external surface of the cap plate 320 to correspond to the first protrusion 371, and a second corresponding recess 374 formed on the external surface of the cap plate 320 to correspond to the second protrusion 372. The first and second corresponding recesses 373 and 374 are formed by modification of the short sides 323 and 324 of the cap plate 320 by the first and second protrusions 371 and 372.

When the electrode assembly 10 is inserted into the opening of the case 315 while the electrode assembly 10 is connected to the cap plate 320, the cap plate 320 is inclined and receives force to be further inserted into the case 315 at the side of the first electrode terminal 21 as compared to at the side of the second electrode terminal 22. Therefore, one side of the cap plate 320 may be over-inserted into the opening.

In order to prevent over-insertion, a first protrusion size P1 of the first protrusion 371 is set to be larger than a second protrusion size P2 of the second protrusion 372 based on an internal plane of the cap plate 320. That is, the first and second protrusions 371 and 372 are formed to be asymmetric to each other. The first and second protrusions 371 and 372 which are asymmetric to each other prevent over-insertion of the cap plate 320 to be safely seated.

That is, the first protrusion size P1 differs from and is e.g. larger than the second protrusion size P2, and a margin at the side of the first electrode terminal 21 is ensured to be larger than a margin at the side of the second electrode terminal 22 so that the cap plate 320 is easily safely seated.

The first protrusion 371 has a distance h to the upper circumferential border. The distance h is preferably measured such that the upper circumferential border and the cap plate 320 are aligned with each other, i.e. extend in an identical plane or without forming a step, in an assembled state of the battery 3.

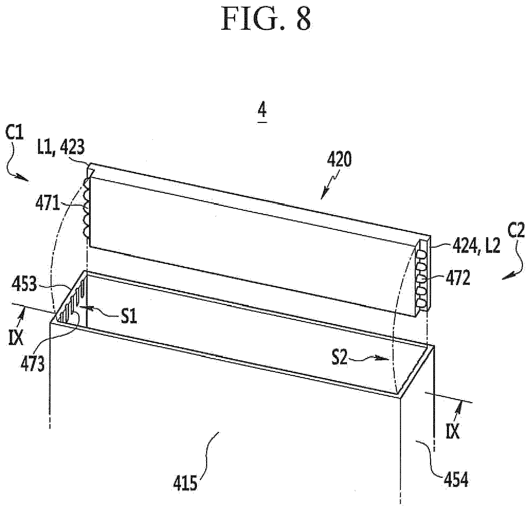

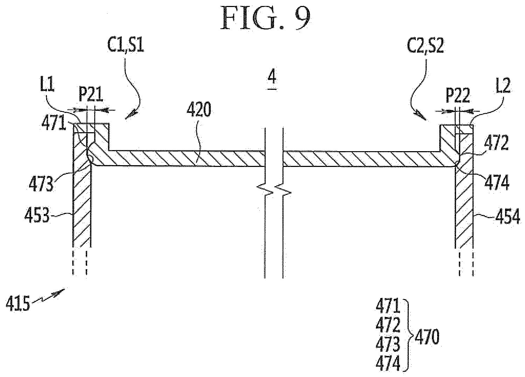

FIG. 8 is an exploded perspective view of a case and a cap plate in a rechargeable battery according to a fourth exemplary embodiment of the present invention. FIG. 9 is a cross-sectional view taken along the line IX-IX of FIG. 8. Referring to FIGS. 8 and 9, in a rechargeable battery 4 of the fourth exemplary embodiment, interconnection areas 470 are formed with contact sections C1, C2 at a cap plate 420. The interconnection areas 470 include a first protrusion 471 formed on an external surface of a short side 423 at the side of the first electrode terminal 21 and a second protrusion 472 formed on an external surface of a short side 434 at the side of the second electrode terminal 22. The first and second protrusions 471 and 472 induce safe seating of the cap plate 420 in the opening.

When the cap plate 420 having the first and second protrusions 471 and 472 is provided in the opening of the case 415, the short lateral sides 453 and 454 of the case 415 are modified and forcibly fastened to the first and second protrusions 471 and 472. In this case, corresponding recesses corresponding to the protrusions 471, 472 of the interconnection areas 470 are formed in the case 415.

That is, the interconnection areas 470 further include a first corresponding recess 473 formed on the short lateral side 453 of the case 415 to correspond to the first protrusion 471, and a second corresponding recess 474 formed on the short lateral side 454 of the case 415 to correspond to the second protrusion 472. The first and second corresponding recesses 473 and 474 are formed by modification of the short lateral sides 453 and 454 of the case 415 by the first and second protrusions 471 and 472.

When the electrode assembly 10 is inserted into the opening of the case 415 while the electrode assembly 10 is connected to the cap plate 420, the cap plate 420 is inclined and receives force to be further inserted into the case 415 at the side of the first electrode terminal 21 as compared to at the side of the second electrode terminal 22. Therefore, one side of the cap plate 420 may be over-inserted into the opening.

In order to prevent over-insertion, the first protrusion size P21 of the first protrusion 471 is set to be larger than the second protrusion size P22 of the second protrusion 472 based on the short lateral side 453 of the case 415. That is, the first and second protrusions 471 and 472 are formed to be asymmetric to each other. The first and second protrusions 471 and 472 which are asymmetric to each other prevent over-insertion of the cap plate 420 to be inserted and safely seated.

That is, the first protrusion size P21 differs from and is e.g. larger than the second protrusion size P22, and a margin at the side of the first electrode terminal 21 is ensured to be larger than a margin at the side of the second electrode terminal 22 so that the cap plate 420 is easily safely seated.

The cap plate 420 is formed with a center part or body that is placed in the opening in an assembled state of the battery 4. The center part is placed between the lateral sides and e.g. between the contact sections C1, C2.

In particular, at least one short lateral side, at which one of the contact sections C1, C2 is arranged, comprises a protruding lip L1, L2, that projects from the center part and e.g. from the contact section C1, C2. Alternatively, the contact section C1, C2 may be arranged on a side of the protruding lip L1, L2 that faces the case 415 in the assembled state of the battery 4. The protruding lip L1, L2 may form an edge of the cap plate 420. In the exemplary embodiment of FIG. 8, the cap plate 420 is formed with two protruding lips L1, L2 that project away from each other.

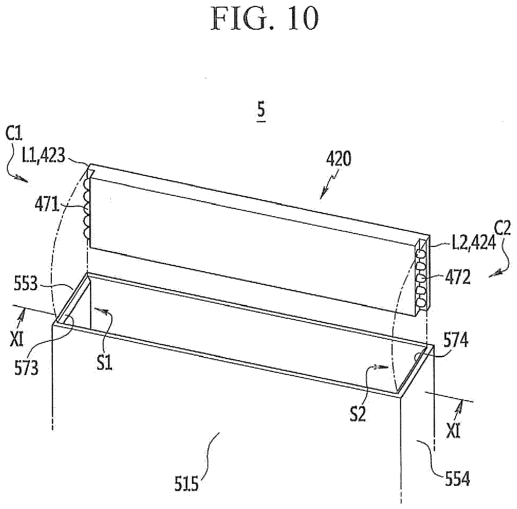

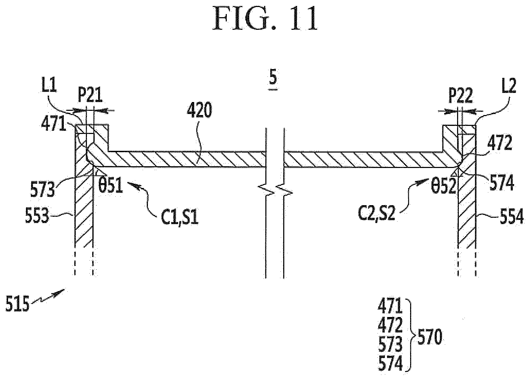

FIG. 10 is an exploded perspective view of a case and a cap plate in a rechargeable battery according to a fifth exemplary embodiment of the present invention. FIG. 11 is a cross-sectional view taken along the line XI-XI of FIG. 10.

Referring to FIGS. 10 and 11, in a rechargeable battery 5 of the fifth exemplary embodiment, interconnection areas 570 include the first and second protrusions 471 and 472 of the fourth exemplary embodiment, a first corresponding inclined plane 573 formed on a short lateral side 553 of a case 515 to correspond to the first protrusion 471, and a second corresponding inclined plane 574 formed on a short lateral side 554 of the case 515 to correspond to the second protrusion 472.

The first and second protrusions 471 and 472 and the first and second corresponding inclined planes 573 and 574 induce safe seating of the cap plate 320 in the opening.

When the electrode assembly 10 is inserted into the opening of the case 515 while the electrode assembly 10 is connected to the cap plate 420, the cap plate 420 is inclined and receives force to be further inserted into the case 515 at the side of the first electrode terminal 21 as compared to at the side of the second electrode terminal 22. Therefore, one side of the cap plate 420 may be over-inserted into the opening.

In order to prevent over-insertion, the first protrusion size P21 of the first protrusion 471 is set to be larger than the second protrusion size P22 of the second protrusion 472 based on an internal plane of the cap plate 420. A first inclination angle θ51 of the first corresponding inclined plane 573 is set to be smaller than a second inclination angle θ52 of the second corresponding inclined plane 574 based on the internal plane of the cap plate 420.

That is, the first and second protrusions 471 and 472 are formed to be asymmetric to each other. The first and second corresponding inclined planes 573 and 574 correspond to the first and second protrusions 471 and 472 and are formed to be asymmetric to each other. The first and second protrusions 471 and 472 and the first and second corresponding inclined planes 573 and 574, which are asymmetric to each other, prevent over-insertion of the cap plate 420 to be safely seated.

That is, the first protrusion size P21 differs from and is e.g. larger than the second protrusion size P22, and a margin at the side of the first electrode terminal 21 is ensured to be larger than a margin at the side of the second electrode terminal 22 so that the cap plate 420 is easily safely seated.

The corresponding inclined planes 573, 574 form recesses that may be shaped as channels that preferably extend completely along the support sections S1, S2.

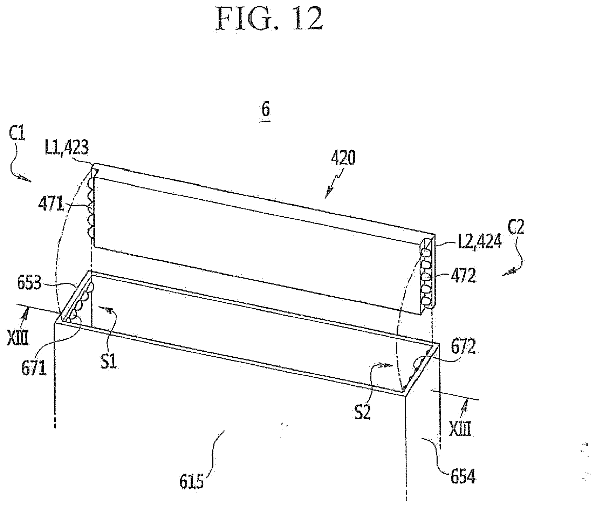

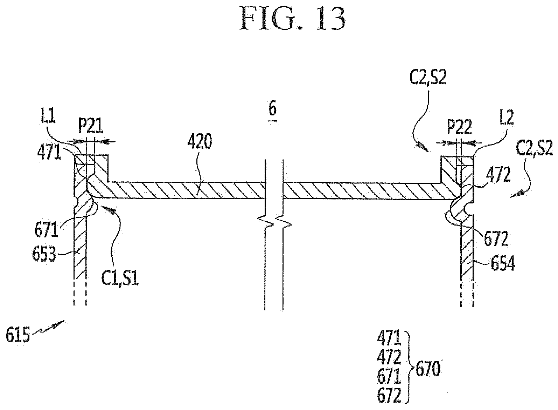

FIG. 12 is an exploded perspective view of a case and a cap plate in a rechargeable battery according to a sixth exemplary embodiment of the present invention. FIG. 13 is a cross-sectional view taken along the line XIII-XIII of FIG. 12.

Referring to FIGS. 12 and 13, in a rechargeable battery 6 of the sixth exemplary embodiment, interconnection areas 670 include contact and support sections C1, C2, S1, S2 with the first and second protrusions 471 and 472 formed on the cap plate 420 of the fourth exemplary embodiment, a first corresponding projection 671 formed on a short lateral side 653 of a case 615 to correspond to the first protrusion 371, and a second corresponding projection 672 formed on a short lateral side 654 of the case 615 to correspond to the second protrusion 372.

The first and second protrusions 471 and 472 and the first and second corresponding projections 671 and 672 induce safe seating of the cap plate 420 in the opening.

When the electrode assembly 10 is inserted into the opening of the case 615 while the electrode assembly 10 is connected to the cap plate 420, the cap plate 420 is inclined and receives force to be further inserted into the case 615 at the side of the first electrode terminal 21 as compared to at the side of the second electrode terminal 22. Therefore, one side of the cap plate 420 may be over-inserted into the opening.

In order to prevent over-insertion, the first protrusion size P21 of the first protrusion 471 is set to be different from and e.g. to be larger than the second protrusion size P22 of the second protrusion 472 based on an internal plane of the cap plate 420. The first and second corresponding projections 671 and 672 have the same protrusion size as the corresponding first and second protrusions 471, 472.

That is, the first and second protrusions 471 and 472 are formed to be asymmetric to each other. The first and second protrusions 471 and 472 which are asymmetric to each other prevent over-insertion of the cap plate 420 to be safely seated.

That is, the first protrusion size P21 is larger than the second protrusion size P22, and a margin at the side of the first electrode terminal 21 is ensured to be larger than a margin at the side of the second electrode terminal 22 so that the cap plate 420 is easily safely seated.

## Claims

1. Rechargeable battery (1) comprising an electrode assembly (10), a case (15), in which the electrode assembly (10) is arranged, and a cap plate (20) that closes an opening of the case (15), wherein the case (15) has the shape of cuboid having long lateral sides (151, 152) and short lateral sides (153, 154), and the cap plate (20) is a quadrangle having long lateral sides (201, 202) and short lateral sides (203, 204) corresponding to the opening, wherein the cap plate (20) comprises two contact sections (C1, C2) at its opposite ends, the opposite ends being the short lateral sides (203, 204) of the cap plate (20), and the contact sections (C1, C2) contacting the case (15) in an assembled state of the rechargeable battery (1), wherein the contact sections (C1, C2) are formed asymmetrically to each other, **characterized in that** at least one of the contact sections (C1, C2) is at least partly arc-shaped.

2. Rechargeable battery (1) according to claim 1, **characterized in that** the case (15) comprises two support sections (S1, S2) that are each in contact with one of the contact sections (C1, C2), wherein the form of the support sections (S1, S2) at least partly corresponds to the form of the contact sections (C1, C2) which they contact.

3. Rechargeable battery (1) according to claim 1 or 2, **characterized in that** the contact sections (C1, C2) are formed as planes (73, 74) that are differently tilted with respect to a reference plane.

4. Rechargeable battery (1) according to any of claims 1 to 3, **characterized in that** one of the contact sections (C2) is orientated perpendicular to an inner side of the cap plate (220), the inner side facing the electrode assembly (10) in the assembled state.

5. Rechargeable battery (1) according to any of claims 1 to 4, **characterized in that** one of the support sections (S2) is at least sectionwise shaped with a seat (272) for one of the contact sections (C2).

6. Rechargeable battery (1) according to claim 1, **characterized in that** both contact sections (C1, C2) are at least partly arc-shaped, wherein thicknesses (P1, P2) of the arc-shaped parts of the contact sections (C1, C2) are different.

7. Rechargeable battery (1) according to any of claims 1 to 6, **characterized in that** the cap plate (20) is formed with overhang sections (O1, O2) that overlap with projections of the contact sections (C1, C2), wherein the overhang sections (O1, O2) have different widths (t11, t21).

8. Rechargeable battery (1) according to any of claims 1 to 7, **characterized in that** the case (15) comprises an upper circumferential border (75, 76) that faces away from the electrode assembly (10), wherein opposite sections of the border (75, 76) have different widths (t12, t22).

9. Rechargeable battery (1) according to any of claims 1 to 8, **characterized in that** at least one of the contact sections (C1, C2) comprises at least one recess (373, 374) or at least one protrusion (471, 472) and the corresponding one of the support sections (S1, S2) comprises at least one protrusion (371, 372) or at least one recess (473, 474), wherein the protrusion (471, 472) is insertable into the recess or between two projections (671, 672) by placing the cap plate (420) into the opening.

10. Rechargeable battery (1) according to claim 9, **characterized in that** the recess (373, 374, 473, 474) and the protrusion (371, 372, 471, 472) or the protrusion (471, 472) and the two projections (671, 672) constitute a form fit.

11. Rechargeable battery (1) according to claim 9 or 10, **characterized in that** the recess (573, 574) is formed as a channel that extends along the support section (S1, S2).

12. Rechargeable battery (1) according to any of claims 1 to 11, **characterized in that** the cap plate (420) comprises a center part that is insertable into the opening, and an edge that is formed with a protruding lip (L1, L2).

13. Rechargeable battery (1) according to claim 12, **characterized in that** the protruding lip (L1, L2) is arranged on the upper circumferential border (75, 76) in the assembled state.

14. Rechargeable battery (1) according to any of claims 1 to 13, **characterized in that** at least one electrode terminal (21, 22) of the rechargeable battery (1) extends through the cap plate (20).

## Patentansprüche

1. Wiederaufladbare Batterie (1), aufweisend eine Elektrodenanordnung (10), ein Gehäuse (15), in dem die Elektrodenanordnung (10) angeordnet ist, und eine Deckplatte (20), die eine Öffnung des Gehäuses (15) verschließt, wobei das Gehäuse (15) die Form eines Quaders, der lange laterale Seiten (151, 152) und kurze laterale Seiten (153, 154) aufweist, aufweist, und wobei die Deckplatte (20) ein Viereck, das lange laterale Seiten (201, 202) und kurze laterale Seiten (203, 204), die der Öffnung entsprechen, aufweist, ist, wobei die Deckplatte (20) zwei Kontaktabschnitte (C1, C2) an ihren gegenüberliegenden Enden aufweist, wobei die gegenüberliegenden Enden die kurzen lateralen Seiten (203, 204) der Deckplatte (20) sind, und wobei die Kontaktabschnitte (C1, C2) in einem zusammengebauten Zustand der wiederaufladbaren Batterie (1) das Gehäuse (15) kontaktieren, wobei die Kontaktabschnitte (C1, C2) asymmetrisch zueinander ausgebildet sind, **dadurch gekennzeichnet, dass** zumindest einer der Kontaktabschnitte (C1, C2) zumindest teilweise bogenförmig ist.

2. Wiederaufladbare Batterie (1) nach Anspruch 1, **dadurch gekennzeichnet, dass** das Gehäuse (15) zwei Stützabschnitte (S1, S2), die jeweils in Kontakt mit einem der Kontaktabschnitte (C1, C2) stehen, aufweist, wobei die Form der Stützabschnitte (S1, S2) zumindest teilweise der Form der Kontaktabschnitte (C1, C2), mit denen sie in Kontakt stehen, entspricht.

3. Wiederaufladbare Batterie (1) nach Anspruch 1 oder 2, **dadurch gekennzeichnet, dass** die Kontaktabschnitte (C1, C2) als Ebenen (73, 74), die bezüglich einer Referenzebene unterschiedlich gekippt sind, ausgebildet sind.

4. Wiederaufladbare Batterie (1) nach einem der Ansprüche 1 bis 3, **dadurch gekennzeichnet, dass** einer der Kontaktabschnitte (C2) perpendikulär zu einer Innenseite der Deckplatte (220) ausgerichtet ist, wobei im zusammengebauten Zustand die Innenseite der Elektrodenanordnung (10) zugewandt ist.

5. Wiederaufladbare Batterie (1) nach einem der Ansprüche 1 bis 4, **dadurch gekennzeichnet, dass** einer der Stützabschnitte (S2) zumindest abschnittsweise mit einem Sitz (272) für einen der Kontaktabschnitte (C2) geformt ist.

6. Wiederaufladbare Batterie (1) nach Anspruch 1, **dadurch gekennzeichnet, dass** beide Kontaktabschnitte (C1, C2) zumindest teilweise bogenförmig sind, wobei Dicken (P1, P2) der bogenförmigen Teile der Kontaktabschnitte (C1, C2) verschieden sind.

7. Wiederaufladbare Batterie (1) nach einem der Ansprüche 1 bis 6, **dadurch gekennzeichnet, dass** die Deckplatte (20) mit Überhangabschnitten (O1, O2), die mit Überständen der Kontaktabschnitte (C1, C2) überlappen, ausgebildet ist, wobei die Überhangabschnitte (O1, O2) verschiedene Breiten (t11, t21) aufweisen.

8. Wiederaufladbare Batterie (1) nach einem der Ansprüche 1 bis 7, **dadurch gekennzeichnet, dass** das Gehäuse (15) einen oberen Umfangsrand (75, 76), der von der Elektrodenanordnung (10) abgewandt ist, aufweist, wobei gegenüberliegende Abschnitte des Rands (75, 76) verschiedene Breiten (t12, t22) aufweisen.

9. Wiederaufladbare Batterie (1) nach einem der Ansprüche 1 bis 8, **dadurch gekennzeichnet, dass** zumindest einer der Kontaktabschnitte (C1, C2) zumindest eine Ausnehmung (373, 374) oder zumindest einen Vorsprung (471, 472) aufweist und der entsprechende der Stützabschnitte (S1, S2) zumindest einen Vorsprung (371, 372) oder zumindest eine Ausnehmung (473, 474) aufweist, wobei der Vorsprung (471, 472) durch Platzieren der Deckplatte (420) in die Öffnung in die Ausnehmung oder zwischen zwei Überstände (671, 672) eingesetzt werden kann.

10. Wiederaufladbare Batterie (1) nach Anspruch 9, **dadurch gekennzeichnet, dass** die Ausnehmung (373, 374, 473, 474) und der Vorsprung (371, 372, 471, 472) oder der Vorsprung (471, 472) und die zwei Überstände (671, 672) einen Formschluss bilden.

11. Wiederaufladbare Batterie (1) nach Anspruch 9 oder 10, **dadurch gekennzeichnet, dass** die Ausnehmung (573, 574) als ein Kanal, der entlang des Stützabschnitts (S1, S2) verläuft, ausgebildet ist.

12. Wiederaufladbare Batterie (1) nach einem der Ansprüche 1 bis 11, **dadurch gekennzeichnet, dass** die Deckplatte (420) einen Mittelteil, der in die Öffnung einsetzbar ist, und einen Rand, der mit einer vorstehenden Lippe (L1, L2) ausgebildet ist, aufweist.

13. Wiederaufladbare Batterie (1) nach Anspruch 12, **dadurch gekennzeichnet, dass** im zusammengebauten Zustand die vorstehende Lippe (L1, L2) auf dem oberen Umfangsrand (75, 76) angeordnet ist.

14. Wiederaufladbare Batterie (1) nach einem der Ansprüche 1 bis 13, **dadurch gekennzeichnet, dass** sich zumindest ein Elektrodenanschluss (21, 22) der wiederaufladbaren Batterie (1) durch die Deckplatte (20) erstreckt.

## Revendications

1. Batterie rechargeable (1) comprenant un ensemble d'électrodes (10), un boîtier (15) dans lequel l'ensemble d'électrodes (10) est agencé, et une plaque de capuchon (20) qui ferme une ouverture du boîtier (15), dans laquelle le boîtier (15) a une forme cuboïde ayant des côtés latéraux longs (151, 152) et des côtés latéraux courts (153, 154), et la plaque de capuchon (20) est un parallélépipède ayant des côtés latéraux longs (201, 202) et des côtés latéraux courts (203, 204) correspondant à l'ouverture, dans laquelle la plaque de capuchon (20) comprend deux sections de contact (C1, C2) au niveau de ses extrémités opposées, les extrémités opposées étant les côtés latéraux courts (203, 204) de la plaque de capuchon (20) et les sections de contact (C1, C2) étant en contact avec le boîtier (15) dans un état assemblé de la batterie rechargeable (1), **caractérisée en ce que** les sections de contact (C1, C2) sont formées de manière asymétrique entre elles, **caractérisée en ce que** :
au moins l'une des sections de contact (C1, C2) est au moins partiellement en forme d'arc.

2. Batterie rechargeable (1) selon la revendication 1, **caractérisée en ce que** le boîtier (15) comprend deux sections de support (S1, S2) qui sont chacune en contact avec l'une des sections de contact (C1, C2), dans laquelle la forme des sections de support (S1, S2) correspond au moins partiellement à la forme de section de contact (C1, C2) avec lesquelles elles sont en contact.

3. Batterie rechargeable (1) selon la revendication 1 ou 2, **caractérisée en ce que** les sections de contact (C1, C2) sont formées comme des plans (73, 74) qui sont inclinés différemment par rapport à un plan de référence.

4. Batterie rechargeable (1) selon l'une quelconque des revendications 1 à 3, **caractérisée en ce que** l'une des sections de contact (C2) est orientée perpendiculairement à un côté interne de la plaque de capuchon (220), le côté interne faisant face à l'ensemble d'électrodes (10) à l'état assemblé.

5. Batterie rechargeable (1) selon l'une quelconque des revendications 1 à 4, **caractérisée en ce que** l'une des sections de support (S2) est au moins formée dans le sens de la coupe avec un siège (272) pour l'une des sections de contact (C2).

6. Batterie rechargeable (1) selon la revendication 1, **caractérisée en ce que** les deux sections de contact (C1, C2) sont au moins partiellement en forme d'arc, dans laquelle les épaisseurs (P1, P2) des parties en forme d'arc des sections de contact (C1, C2) sont différentes.

7. Batterie rechargeable (1) selon l'une quelconque des revendications 1 à 6, **caractérisée en ce que** la plaque de capuchon (20) est formée avec des sections en surplomb (O1, O2) qui recouvrent les saillies des sections de contact (C1, C2), dans laquelle les sections en surplomb (O1, O2) ont des largeurs (t11, t21) différentes.

8. Batterie rechargeable (1) selon l'une quelconque des revendications 1 à 7, **caractérisée en ce que** le boîtier (15) comprend une bordure circonférentielle supérieure (75, 76) qui est orientée à l'opposé de l'ensemble d'électrodes (10), dans laquelle les sections opposées de la bordure (75, 76) ont des largeurs (t12, t22) différentes.

9. Batterie rechargeable (1) selon l'une quelconque des revendications 1 à 8, **caractérisée en ce qu'**au moins l'une des sections de contact (C1, C2) comprend au moins un évidement (373, 374) ou au moins une saillie (471, 472) et la section correspondante des sections de support (S1, S2) comprend au moins une saillie (371, 372) ou au moins un évidement (473, 474), dans lequel la saillie (471, 472) peut être insérée dans l'évidement ou entre deux saillies (671, 672) en plaçant la plaque de capuchon (420) dans l'ouverture.

10. Batterie rechargeable (1) selon la revendication 9, **caractérisée en ce que** l'évidement (373, 374, 473, 474) et la saillie (371, 372, 471, 472) ou la saillie (471, 472) et les deux saillies (671, 672) constituent un ajustement par complémentarité de forme.

11. Batterie rechargeable (1) selon la revendication 9 ou 10, **caractérisée en ce que** l'évidement (573, 574) est formé comme un canal qui s'étend le long de la section de support (S1, S2).

12. Batterie rechargeable (1) selon l'une quelconque des revendications 1 à 11, **caractérisée en ce que** la plaque de capuchon (420) comprend une partie centrale qui peut être insérée dans l'ouverture, et un bord qui est formé avec une lèvre en saillie (L1, L2).

13. Batterie rechargeable (1) selon la revendication 12, **caractérisée en ce que** la lèvre en saillie (L1, L2) est agencée sur la bordure circonférentielle supérieure (75, 76) à l'état assemblé.

14. Batterie rechargeable (1) selon l'une quelconque des revendications 1 à 13, **caractérisée en ce qu'**au moins une borne d'électrode (21, 22) de la batterie rechargeable (1) s'étend à travers la plaque de capuchon (20).
